# EUROPEAN PATENT SPECIFICATION

(11) **EP 1 642 710 B1**
(45) Date of publication and mention of the grant of the patent: **02.07.2008**
(21) Application number: 04023118.5
(22) Date of filing: 29.09.2004
(51) Int. Cl.: B32B 37/00, B32B 5/14, B32B 5/28, B32B 27/32, B29C 70/50

(54) **Method of mixing fibrous network of natural polymer and a synthetic polymer as matrix**
Verfahren zum Mischen eines Fasernettwerks aus natürlichen Polymeren und eines synthetischen polymeren Matrixmaterials
Procédé de fabrication de mélanges d' un réseau de fibres à base de polymère naturel et d'un polymère synthétique formant matrice

(43) Date of publication of application: 05.04.2006
(73) Proprietor: Ezzat, Sami, Dr.-Ing., 80995 München (DE)
(72) Inventor: Ezzat, Sami, Dr.-Ing., 80995 München (DE)
(74) Representative: Weitzel, Wolfgang

(56) References cited:
- EP-A- 0 529 336
- EP-A- 0 728 570
- DE-A- 4 106 692
- DE-A- 19 918 079
- DE-U- 9 414 073
- US-A- 4 340 558
- US-A1- 2004 084 197
- PATENT ABSTRACTS OF JAPAN vol. 0123, no. 87 (C-536), 14 October 1988 (1988-10-14) & JP 63 132943 A (UBE NITTO KASEI KK), 4 June 1988 (1988-06-04)

## Description

Presentation of paper laminated with polymer foil as No-One packaging material that possesses all required properties combinations of standards for up dated packaging, till now is not available. Whereas paper provided the base as a supporting medium, the polymer provides the functional requirements properties in particular in case of the most critical packaging of food stuffs highlighting not only avoiding and eliminating bacterial contamination by using H₂O₂, but also its absolute freeness from even traces of chemical contamination resources. These requirements are of utmost importance. This invention introduces a new material possessing a wide range of characteristics its end product usability will meet the very strict requirement packing material for food industry and other supplementary.

Packaging material of the above mentioned type respectively methods for producing the same have become known by the following documents:
JP 63 132943 A
DE 199 18 079 A
US 2004/084197 A1
US 4 340 558 A
DE 9 414 073.1 U

It is the objective of the invention to provide a method for producing packaging material out of impregnated laminated multiple composite modules without the necessity of using adhesive.

This objective is met by the method of claim 1; Packaging material obtainable through this method is defined by claim 2 and claim 4 defines its use.

According to this invention no adhesive is required whether for the multi-layer itself or any of its converted products. 1.

The main aspect of this invention is building-up composite impregnated laminate as follows:
The raw material required for the multi-layer end product is strictly limited to using natural virgin cellulosic hollow fibers as net-work and polyethylene or polypropylene, or both as matrix nevertheless with rather higher molecular-weight besides a limited range of molecular weight distribution avoiding the presence of oligomers.

During the last two decades, quite intensive viscosity measurement studies covering the molecular weight determinations of high polymers have shown that high polymers were and are non homogenous and have poly-disperse character. In particular, polyethylene tends on higher temperature, to net building, in other words higher fluidity of the melt that will lead to integration or penetration between the macromolecules, even those having different origin whether natural or synthetic building-up a mixed nonreversible aggregate which processes completely different characteristics from its origen:
Consequently mixing natural with synthetic polymers under very strict conditions using thermoplast, this melted high-polymer, its viscosity in other word the fluidity of the melt which is the major fundamental of the invention nevertheless not reaching its degradation temperature besides the high pressure adopted to fill-up the hollow fibers and its interspacing which is fundamental. The arrangement sequence of the layers will be as follows:

| | |
|---|---|
| Basic module: | One layer as fiber network Two layers of polyethylene from each side |
| Consecutive module: | One layer fiber network and one layer matrix. The number of consecutive modules will depend on the quality and requirements of the final product. |

In the meantime this build up system will give a material with a supreme Impregnation, besides avoiding any contaminant or soluble particles recommended by the EEC as well as high suitability of an end product to meet all restrictions for food packaging.

### 2.

Multi-layer laminate under specific conditions, using:
Thermoplast polymer and fiber net-work in approximate ratio around 50:50 and max. 40:60, each as the third fundamental the former will melt according to the temperature adopted and will furthermore migrate in the fiber net-work depending on the running pressure which will accelerate the viscosity. In other words the fluidity to a certain extent leaving the excess amount of the thermoplast polymer as none-migrant. This none-migrant rest layer as a third fundamental, its building-up and volume will be majorly dimensioned by the interaction between:
- The adopted pressure which must be between 20 and 50 bar, whereby 20 bar is the minimum.
- Thickness and basic weight of the individual consecutive layers of both thermoplast polymer and fiber net-work. It is of utmost importance that the none-migrant rest of the thermoplast polymer, under the continuous processing pressure, will build-up the barrier between these specific layers, in other words modules
   - an extreme increase of folding and tensile strength and build a highly compact end product against all surrounding influences
   - limiting elongation of matrix.

### 3.

The probability for a high molecular thermo polymer in melted phase, its fluidity under pressure of not less than 20 bar besides cellulose fibers under the same temperature the latter will build-up aggregates, which will contain not only colloidale disperse, but also different configurations of molecular aggregates as well as cristaline (1). An important property of mixed polymer materials is their ability to recover from deformation nevertheless is time dependant consequently:
- Status - 1: under the melting temperature, building-up of deformation aggregates will take place and in the meantime the whole system will be under pressure.
- Status - 2: by keeping the pressure in other words declined space volume and eliminating the temperature factor by cooling so that the deformation aggregates will reach the setting point in other words the hardening point of the polymer or the so called relaxation phase for the cellulose, which will give an end thickness decrease of around 30 %.

Optimizing these two stresses against each other as fourth fundamental is the base of building not only the multiplayer laminate, but also the super barriers in the system.

### (1) dissertation: Dr.Ing. Ezzat, sami Darmstadt 05.74

Teil II Untersuchung mit Rontgenklienwinkel (kissing-kamera) and in particular: Hess and Kissig publications:
Kolloid-z 130 (1953) and 152 (1957, Das Papier 12 (1958) 7

### 4.

The continuous techniques of the completely impregnated laminated multi-modules using a press system, in which before leaving the pressurized zone of the machine, the end product will be further and continuously cooled under the same pressure till reaching its setting point, giving the possibility to build up numerous H-bonds between the different aggregates of the mixed high polymers as the fifth fundamental building one composite multi-module, having a number of modules up to 11 or more in one through put.

### 5.

Adopting microscopic technique as the reliable mean achieved to verify and prove beyond doubt the governing construction of MLL and the fulfillment requirements highlighting the complete closing of the interspacing between the fibers as well fiber capillarity and building it as one impregnated laminated module, bordered by a complex bond between the upper and bottom thermoplast layers besides a very low oxygen permeability factor and quite high physical properties.
• fiber net-work versus polymer matrix
• woven and no woven fiber constituents for longitudinal versus cross direction

| Modules Total No. Of Modules | Base Modules | Configuration Additional No.of | | Fiber constituent | | Termoplast Polymer | | End Product Basic X weight in g/m² |
|---|---|---|---|---|---|---|---|---|
| | | Modules | Layers | No. of Layers X weight In g/m² | % in End Prod. | No. of Layers X weight in g/m² | % in End Prod. | |
| | | Modules | Layers | | | | | |
| 1 | 1 | | 3 | 1x60=60 | 50% | 2x30=60 2x30 | 50% | 120 |
| 2 | 1 | 1 | 5 | 1x20=80 | 60% | 1x20=120 | 40% | 200 |
| 3 | 1 | 2 | 7 | 3x60=180 | 60% | 4x30=120 4x30 | 40% | 300 |
| 4 | 1 | 3 | 9 | 4x60=240 | 60% | 1x40=160 4x30 | 40% | 400 |
| 5 | 1 | 4 | 11 | 5x60=300 | 60% | 2x40=200 4x30 | 40% | 500 |
| 6 | 1 | 5 | 13 | 6x60=360 | 60% | 3x40=240 | 40% | 600 |
| 6 | | 1-5 | | 1 woven 4 | | | | |
| 6 | 1 | 1-5 | | Nonwoven | | | | |

Samples with 5 layers showed the following average analytical results

| | |
|---|---|
| Moisture content | 1,78% |
| Ash content | 2,92% |

Ash content originated from the paper resource used,

| | |
|---|---|
| Thickness around | 0.4 mm |

### Measurement of Physical properties

Burst-strength (ISO 2759)> 2000 kPa

| | | | |
|---|---|---|---|
| | Tensile strength (N/mm²) on the length direction | | 51,0 |
| | On the square direction | | 30,3 |
| Elongation % | | on the length direction | 11,9 % |
| | | On the square direction | 18,3 % |
| Oxygen penetration [cm³ / (m² day bar)] | | | |

This measurement gave for the 5 layers sample with basic weight of paper 60 g/m² gave a reading of 27,0. The same measurement with 120 g/m² basis weight reached 108, and 180 g/m² basis weight reached 153 [cm³ / (m² day bar)]

### 6.

This phenomena was tested using a sample from a test run its build-up having an end product with a total of 5 layers having only 60 g/m², in this test adopting Mictrotome Mocroscopic cross section examination verify the structure development of distribution and constituents location. This test showed quite clearly the full impregnation of the fiber constituents (in this case the paper) and 3 Barriers of the thermoplast. Results showed that barriers as well as impregnation of the paper layers further confirmed by the analytical results carried out by Fraunhofer Institute for food packing showed that the oxygen penetration factor was almost 60% less than that obtained from the previous test run. Microscopic examination technique showed a fully fiber impregnation zone bordered with barriers. This fact is in conformity with the oxygen penetration factor.

### 7.

It is quite clear that the effect of the adopted pressure has the major importance in building-up the barriers and the homogeneity of the fiber impregnation zone. In other words the higher processing pressure the more homogeneous the build-up of the MLL will be.

By increasing the number of modules, the number of barriers will correspondingly increase building-up an effective super barriers system.

### 8.

Direct welding by pressurizing hot air and to build-up the seam without any additive is quite successful and gave excellent results as well as Ultra-sonic welding technique gave also positive results, in other words again, no foreign adhesive or the like is needed welding by HOT AIR depends on the thickness of the laminate packing material, nevertheless trial run was positive with hot air (temperature of which reached 550° C welding with Ultra-sonic oscillation technique gave also positive results.

### 9.

MLL contains 50 % thermo-polymer which will enable this compounding to a certain extent the workability of new products with molding techniques.

### 10.

MLL in the above mentioned construction system will not be only water non-absorbent but also water repellant.

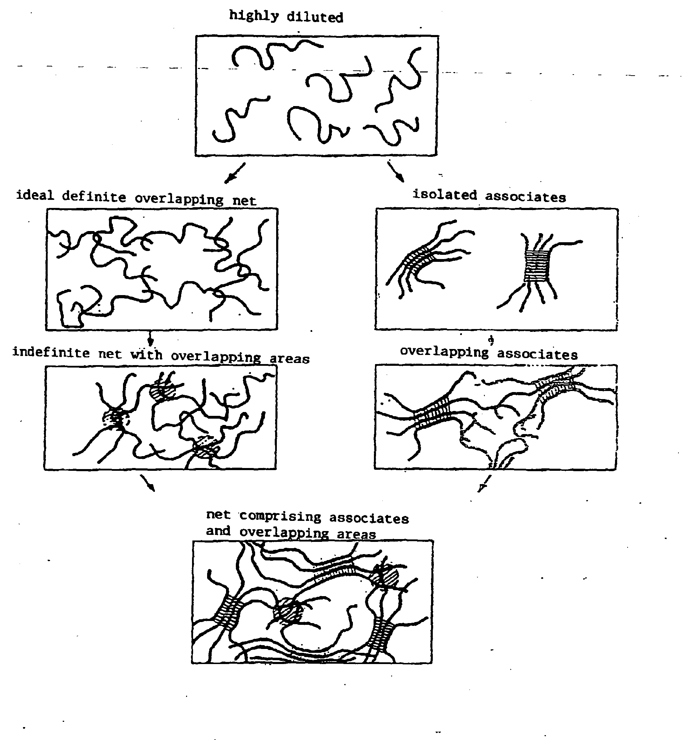

## Claims

1. Method for producing packaging material according to the following steps:
a. mixing natural polymer as fibre net work and melted synthetic polymer as matrix, wherein said fibre net work is adopted as paper or non-woven or woven textile and is entirely free from any foreign material, and said synthetic polymer is polypropylene or polyethylene, so as to build-up composite modules, each one being composed of one layer natural polymer and one layer synthetic polymer whereby the basic module is composed of one layer of synthetic polymer on each side of this natural polymer,
b. building-up a product composed of one basic module and minimal two additional modules, having overall number of natural and synthetic polymer layers to be 5 layers, whereby the built up can reach one basic and six additional modules meaning 13 layer of natural and synthetic polymer layers,
c. applying high temperature of not less than 150° C and high pressure, not less than 20 bar during the melting phase of the synthetic polymer so that the fluidity of the melt is enhanced to act its double function, on one side and to fill-up the interspaces between the fibres and the hollow interior of the fibres themselves thus building an over all binding material, and building a barrier and the two outer layers of the material, wherein the ratio between the natural and synthetic polymer is selected between 50 / 50% (w/w) up to 40 / 60% (w/w),
d. passing the material through a reduced temperature zone of a processing production line, and
e. compacting the inbetween spacing of the consecutive layers.

2. Packaging Material built-up as per Claim 1.

3. Use of Packaging Material as defined in Claim 2 for packaging.

4. Packaging Material as per Claim 2, with an increased number of modules.

## Patentansprüche

1. Methode zur Produktion von Verpackungsmaterial gemäß den nachstehenden Schritten:
a. Mischen von natürlichem Polymer als Fasernetz und geschmolzenem Polymer als Matrix, wobei das Fasernetz als Papier oder Vlies- oder Webstoff angewendet wird und vollkommen frei von Fremdmaterial ist und wobei das synthetische Polymer Polypropylen oder Polyethylen ist, um zusammengesetzte Module aufzubauen, deren jedes aus einer Schicht natürlichen Polymers und einer Schicht synthetischen Polymers zusammengesetzt ist, wobei das Basismodul aus einer Schicht synthetischen Polymers auf jeder Seite dieses natürlichen Polymers zusammengesetzt ist;
b. Aufbauen eines Produkts, bestehend aus einem Basismodul und mindestens zwei zusätzlichen Modulen, so dass die Gesamtzahl natürlicher und synthetischer Polymerschichten 5 Schichten beträgt, wobei der Aufbau ein Basismodul und sechs zusätzliche Module erreichen kann, also 13 Schichten natürlicher und synthetischer Polymerschichten;
c. Aufbringen einer hohen Temperatur von nicht unter 150°C und eines hohen Drucks nicht unter 20 Bar während der Schmelzphase des synthetischen Polymers, so dass die Fluidität der Schmelze verstärkt wird, damit sie ihre Doppelfunktion ausüben kann, auf einer Seite und Auffüllen der Zwischenräume zwischen den Fasern und des inneren Hohlraums der Fasern selbst, wodurch ein Bindematerial aufgebaut wird, und Aufbauen einer Barriereschicht und der zwei Außenschichten des Materials, wobei das Verhältnis zwischen dem natürlichen und dem synthetischen Polymer ausgewählt ist zwischen 50/50 Gewichtsprozent bis zu 40/60 Gewichtsprozent;
d. Durchführen des Materials durch eine Zone reduzierter Temperatur einer Verarbeitungs-Produktionslinie; und
e. Verdichten der Zwischenabstände der aufeinander folgenden Schichten.

2. Verpackungsmaterial, das gemäß Anspruch 1 aufgebaut ist.

3. Verwendung von Verpackungsmaterial gemäß Anspruch 2 zum Verpacken.

4. Verpackungsmaterial gemäß Anspruch 2 mit einer erhöhten Anzahl an Modulen.

## Revendications

1. Procédé pour la production de matériau d'emballage comprenant les étapes suivantes :
a. mélange d'un polymère naturel sous la forme d'un réseau de fibres et d'un polymère synthétique sous la forme d'une matrice, ledit réseau de fibres étant choisi parmi un papier ou un textile non tissé ou tissé et ne contenant absolument aucune matière étrangère, et ledit polymère synthétique étant du polypropylène ou du polyéthylène, de façon à constituer des modules composites qui sont composés chacun d'une couche de polymère naturel et d'une couche de polymère synthétique, le module de base étant composé d'une couche de polymère synthétique sur chaque face de ce polymère naturel,
b. formation d'un produit composé d'un module de base et d'au moins deux modules supplémentaires, ayant un nombre total de couches de polymères naturel et synthétique de 5 couches, de sorte que la formation peut atteindre un module de base et six modules supplémentaires, autrement dit 13 couches de polymères naturel et synthétique,
c. application d'une température élevée d'au moins 150°C et d'une forte pression d'au moins 20 bars pendant la phase de fusion du polymère synthétique afin que la fluidité de la matière fondue soit accrue pour exercer sa double fonction sur un côté et de remplir les interstices entre les fibres et l'intérieur creux des fibres elles-mêmes en formant ainsi un matériau liant global, et en formant une barrière et les deux couches extérieures du matériau, le rapport entre les polymères naturel et synthétique étant choisi entre 50/50 % (poids/poids) et 40/60 % (poids/poids),
d. passage du matériau à travers une chaîne de production de traitement, et
e. compactage des espaces entre les couches successives.

2. Matériau d'emballage formé selon la revendication 1.

3. Utilisation d'un matériau d'emballage selon la revendication 2 pour l'emballage.

4. Matériau d'emballage selon la revendication 2, avec un nombre augmenté de modules.
